# FASCICULE DE BREVET EUROPEEN

(11) **EP 3 723 995 B1**
(45) Date de publication et mention de la délivrance du brevet: **23.02.2022**
(21) Numéro de dépôt: 18815717.6
(22) Date de dépôt: 13.12.2018
(51) Int. Cl.: B42D 25/29, B42D 25/324, B42D 25/328, B42D 25/351, B42D 25/342

(54) **ENSEMBLE CONSTITUE D'UN DISPOSITIF DE TRANSPARENCE COMPLEXE ET D'AU MOINS UN RESEAU DE MICRO-IMAGES, AINSI QUE DOCUMENT DE SECURITE LE COMPORTANT**
ANORDNUNG AUS EINER KOMPLEXEN TRANSPARENZVORRICHTUNG UND MINDESTENS EINER ANORDNUNG VON MIKROBILDERN SOWIE SICHERHEITSDOKUMENT MIT SOLCH EINER ANORDNUNG
ASSEMBLY CONSISTING OF A COMPLEX TRANSPARENCY DEVICE AND AT LEAST ONE ARRAY OF MICRO-IMAGES, AS WELL AS A SECURITY DOCUMENT COMPRISING SAME

(30) Priorité: 14.12.2017 FR 1762169
(43) Date de publication de la demande: 21.10.2020
(73) Titulaire: Oberthur Fiduciaire SAS, 75008 Paris (FR)
(72) Inventeur: DE BOUGRENET DE LA TOCNAYE, Jean-Louis, 29820 Guilers (FR); DEJEAN, Marie, 35510 Cesson Sevigne (FR); NOURRIT, Vincent, 29200 Brest (FR); GILLOT, Julien, 35410 Chateaugiron (FR); BORDE, Xavier, 35410 Osse (FR)
(74) Mandataire: Regimbeau
(86) Numéro de dépôt international: PCT/EP2018/084669
(87) Numéro de publication internationale: WO 2019/115664

(56) Documents cités:
- WO-A1-2013/178349
- WO-A1-2016/149760
- WO-A1-2017/184581
- DE-A1-102006 025 334

## Description

### DOMAINE DE L'INVENTION

La présente invention se rapporte à un ensemble constitué d'une part, d'un dispositif de transparence complexe, c'est à dire d'un dispositif réfractif et/ou diffractif agissant sur la phase de la lumière et, d'autre part, d'au moins un réseau de micro-images.

Elle se rapporte également à un document de sécurité tel qu'un billet de banque qui comporte un tel ensemble.

### ARRIERE PLAN TECHNOLOGIQUE DE L'INVENTION

Différentes techniques existent pour coder une information par voie optique dans le domaine des documents de sécurité et, plus particulièrement, des documents fiduciaires tels que les billets de banque.

La technique de type holographique est la plus ancienne. Les hologrammes sur carte à puce sont encore utilisés, comme décrit par exemple dans WO9740464.

De la même manière, les dispositifs exploitant l'effet de moiré sont actuellement largement utilisés. On peut se reporter à ce sujet à EP2811470. Ils reposent sur un couplage entre un réseau de phase (tels que des dispositifs micro-optiques) et un réseau de micro-images, de pas différents.

Par ailleurs, les techniques apparentées au principe d'auto-stéréoscopie qui privilégient certains angles de lecture sont également très développées, comme illustré dans US2014/177008.

Des variantes combinant les différents effets précités ont bien entendu été proposées, notamment dans WO2016/183635.

D'autres techniques secondaires mettant en oeuvre des effets plus complexes tels que ceux qui utilisent la polarisation (voir par exemple WO2016/141420) ou des modes de résonance (par exemple à "effet plasmon") sont également proposées ou viennent le plus souvent renforcer une protection déjà existante (voir par exemple WO2015/113718).

Enfin, le document WO 2017/184581 décrit un ensemble selon le préambule de la revendication 1 de la présente demande.

Toutes ces techniques, lorsqu'elles sont appliquées aux documents de sécurité tels que les documents fiduciaires, ont pour but de rendre leur reproduction non autorisée particulièrement difficile, autrement dit de compliquer la tâche des faussaires.

La présente invention, qui se base sur la technique de type multiscopique, a pour but de proposer une nouvelle variante qui est encore plus difficile à reproduire et qui comporte des moyens particulièrement efficaces pour vérifier l'authenticité du document concerné.

### RESUME DE L'INVENTION

Ainsi, la présente invention se rapporte à un ensemble constitué d'une part, d'un dispositif de transparence complexe, c'est à dire d'un dispositif réfractif et/ou diffractif agissant sur la phase de la lumière et, d'autre part, d'au moins un réseau de micro-images, dans lequel :
- ledit dispositif de transparence complexe est constitué d'un réseau bidimensionnel périodique formé de "pupilles" individuelles dans lequel chaque pupille comporte un dispositif micro-optique, au moins une partie de ces dispositifs micro-optiques présentant un axe optique non centré, et au moins une partie de ces dispositifs micro-optiques étant positionnée de manière non périodique, c'est à dire avec des décalages variables de leur axe optique au sein dudit réseau ;
- ledit réseau de micro-images est constitué d'autant de micro-images que de dispositifs micro-optiques ;
- chaque micro-image présente un contour identique à celui de la pupille associée et une surface au plus identique à celle de la pupille associée ;
- chaque micro-image est subdivisée en imagettes, de sorte que lorsque ledit dispositif de transparence est positionné en regard dudit réseau de micro-images, et qu'un observateur observe ledit réseau au travers dudit dispositif de transparence, il voit, au moins selon une direction d'observation donnée, une image reconstituée par la combinaison des imagettes associées à cette direction,
caractérisé par le fait qu'au sein d'une même subdivision, certaines imagettes, - c'est-à-dire seulement une partie de celles-ci, lesquelles constituent un « premier groupe » - sont réparties de telle manière que lorsque ledit dispositif de transparence est positionné en regard dudit réseau de micro-images, ces imagettes sont disposées chacune selon l'axe optique dudit dispositif micro-optique associé.

Par ailleurs, selon d'autres caractéristiques non limitatives et avantageuses de l'invention :
- chacun desdits dispositifs micro-optiques présente un axe optique non centré et que tous lesdits dispositifs micro-optiques sont positionnés de manière non périodique ;
- lesdites pupilles sont de forme et de surface identiques ;
- lesdits dispositifs micro-optiques présentant un axe optique non centré sont constitués de lentilles de Fresnel ;
- lesdits dispositifs micro-optiques présentant un axe optique non centré sont constitués de réseaux blazés circulaires ;
- chaque micro-image est subdivisée en au moins deux imagettes ;
- au sein d'une même subdivision, d'autres imagettes, lesquelles constituent un deuxième groupe, sont réparties de telle manière que lorsque ledit dispositif de transparence est positionné au regard dudit réseau de micro-images, ces imagettes sont disposées chacune selon un même axe, différent de l'axe optique dudit dispositif micro-optique associé ;
- l'image reconstituée par la combinaison des imagettes de chaque subdivision, vue selon au moins un angle d'observation prédéterminé, constitue une information reconnaissable ou présente un effet visuel reconnaissable ;
- ledit dispositif de transparence complexe et ledit réseau de micro-images sont portés par un même support ;
- ledit dispositif de transparence complexe et ledit réseau de micro-images sont portés par des supports différents ; et
- ledit réseau bidimensionnel de micro-images est généré par un dispositif d'affichage tel qu'un écran d'outil numérique, nomade ou non.

L'invention se rapporte également à un document de sécurité, tel qu'un billet de banque, dont l'une des faces opposées porte un dispositif de transparence complexe de l'ensemble selon l'une des caractéristiques précédentes.

Avantageusement :
- ledit dispositif de transparence complexe s'étend au-dessus d'une impression portée par l'une desdites faces opposées, cette impression constituant le réseau bidimensionnel de micro-images dudit ensemble selon l'une des caractéristiques précédentes.
- ledit dispositif de transparence complexe s'étend au travers d'une fenêtre qui débouche sur lesdites faces opposées et qui comporte une impression constituant le réseau bidimensionnel de micro-images dudit ensemble selon l'une des caractéristiques précédentes, cette fenêtre et cette impression étant disposées l'une par rapport à l'autre de manière à pouvoir les superposer au moins momentanément.
- ladite impression est constituée d'au moins une encre choisie dans le groupe constitué par les encres suivantes : encre visible noire, de couleur, matte, brillante, à effet iridescent, métallique, optiquement variable, invisible mais visible sous rayonnement ultraviolet (fluorescence ou phosphorescence) ou visible sous rayonnement infrarouge.
- Ledit dispositif de transparence est revêtu d'une couche de vernis transparent, de sorte que la surface supérieure dudit dispositif est plane.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est un schéma destiné à illustrer le principe de la multiscopie ;
- les figures 2 et 3 sont des schémas destinés à illustrer des cas d'auto-stéréoscopie ;
- la figure 4 est un schéma destiné à expliquer comment on reconstitue des images différentes à partir de micro-images qui s'étendent sous un réseau de lentilles ;
- la figure 5 est un schéma qui montre l'équivalence entre la combinaison d'une lentille réfractive et d'un prisme d'une part, et une lentille de Fresnel dont l'axe optique est décentré d'autre part;
- les figures 6A à 6D sont des schémas destinés à montrer la symétrie des mécanismes mis en jeu, à savoir le décentrement de l'axe optique des lentilles et l'adaptation de l'emplacement de l'imagette (portion d'image) ;
- les figures 7A à 7C illustrent un mode de réalisation particulier de l'ensemble selon l'invention ;
- les figures 8 et 9 sont des vues de dessus de deux variantes de réalisation de portion de réseaux de microlentilles ;
- la figure 10 est un schéma montrant un billet de banque vu de dessus, et dont l'une des faces porte un ensemble selon la présente invention ;
- la figure 11 A est une vue très schématique, en coupe, de l'ensemble de la figure précédente ;
- les figures 11B et 11 C sont des vues analogues à la figures 11 A de variantes de réalisation ;
- la figure 12 est une vue analogue à la figure 10, le billet étant pourvu d'une fenêtre transparente qui porte seulement un réseau de lentilles dudit ensemble, cette figure présentant également un téléphone sur l'écran duquel on peut afficher un réseau de micro-images ;
- enfin, la figure 13 représente un billet qui comporte, dans une première région, une fenêtre transparente qui porte seulement un réseau de lentilles dudit ensemble et, dans une seconde région, une impression d'un réseau de micro-images.

### DESCRIPTION DETAILLEE DE L'INVENTION

Selon la présente invention, on forme un ensemble constitué de deux éléments principaux, à savoir un dispositif de transparence complexe qui est susceptible de figurer sur un document de sécurité tel qu'un billet de banque et qui fonctionne en transmission, constitué de dispositifs micro-optiques, ainsi qu'un support sur lequel vient se positionner en regard le dispositif de transparence complexe, moyennant un simple alignement.

Préférentiellement, ce support accueille à l'endroit où l'on superpose le dispositif de transparence complexe, des motifs non interprétables à l'œil nu qui peuvent être apposés directement sur le substrat du support (en papier et/ou en polymère) ou être visibles sur l'écran d'un téléphone de type "smartphone" ou d'une tablette tactile par exemple, et être lisibles en réflexion ou en transmission.

Alternativement, une partie des motifs peut se trouver sur le substrat du support et une autre sur l'appareil nomade décrit ci-dessus. Lorsque ces deux éléments sont superposés correctement ils permettent :
- soit, de former différentes images, pour un certain nombre de positions d'observation données (en vision de près c'est à dire au voisinage de 40 cm) de façon à donner une illusion de relief ou de mouvement ;
- soit, de combiner des images en vision stéréoscopique de telle manière à faire percevoir une couleur par combinaison colorimétrique;
- soit de former une deuxième image, en une position d'observation précise, de telle façon que cette deuxième image soit en quelque sorte cachée dans l'image principale.

Un décryptage est donc mis en oeuvre et est dû à la combinaison de deux plans, celui d'un réseau de micro-images et celui d'un réseau de dispositifs micro-optiques qui sont eux cryptés ou codés individuellement, c'est-à-dire dont l'agencement des plus petites unités constituantes, les micro-images réciproquement les micro-optiques, ne suit aucune règle de symétrie ou de réplication (translation), laquelle est d'emblée simple à reconnaître par simple observation à l'œil nu ou aidée (loupe, microscope).

Alternativement, la combinaison des deux plans peut être fixe et réalisée une fois pour toute soit directement sur le substrat du support soit indirectement par l'intermédiaire d'un autre vecteur lui-même apposé ou intégré au substrat du support (par exemple des éléments transférés ou laminés à chaud ou à froid, des fils noyés partiellement, etc.).

### Principe du codage et état de l'art spécifique à la présente invention :

Le système de l'ensemble selon l'invention réside dans le codage (cryptage) combiné support + dispositif de transparence complexe. On entend par dispositif de transparence complexe tout dispositif réfractif, diffractif ou combiné, agissant sur la phase de la lumière (par exemple réseaux diffractifs, lentilles, prismes, etc.).

Chaque image du support est constituée "d'imagettes" correspondant à des sous-éléments d'un réseau de micro-images (à la limite, la plus petite imagette est le pixel de l'image elle-même).

Le principe de multiscopie est de présenter à la vision différentes images en fonction de l'inclinaison et de l'orientation du regard.

Les plus connues sont l'utilisation de barrières de parallaxe ou de réseaux lenticulaires. La présente invention s'en inspire ici en la généralisant.

En effet, l'ensemble selon l'invention est constitué d'un réseau bidimensionnel réfractif derrière lequel se trouve placé un réseau de micro-images, chaque imagette pouvant être décalée par rapport à l'axe optique de la lentille qui lui est directement en vis-à-vis à des fins de formation d'images indépendantes.

Par le passé, de nombreuses réalisations de ce type ont déjà été proposées. Ainsi, par exemple, selon US2014/177008, en inclinant le dispositif, on peut voir une image qui bouge, des mouvements d'objets qui se déplacent les uns par rapport aux autres ou des effets de relief, de formes, d'apparition/ disparition, de zoom. Pour cela, des portions d'images (correspondant chacune à un angle de vue) sont agencées d'une manière bien particulière sous chaque lentille.

De même, dans WO2015011493, on a affaire à une image différente par angle de vue (la différence étant que les portions d'images placées sous le centre des lentilles sont plus grandes que celles placées sur les côtés, car la gamme d'angle perçue au centre des lentilles est plus grande).

### Définitions :

Dans l'ensemble de la présente demande, les termes et expressions suivants ont les définitions données ci-après :
Dispositif micro-optique : il est formé d'un dispositif dont la taille peut varier entre 25 µm et 100 µm. Sa distance focale peut varier entre 10 et 400 µm et préférentiellement entre 40 µm et 100 µm.
Réseau de micro-images : Il est formé d'imagettes dont la taille est supérieure à 2 µm et qui sont grossies sous l'effet des dispositifs micro-optiques. Cela permet ainsi de former une grande image.
Image : l'image est ce qui est perçu lorsqu'on regarde à travers un réseau de dispositifs micro-optiques. Sa taille correspond à la taille dudit réseau, c'est-à-dire entre quelques millimètres carré et quelques centimètres carré. Elle est formée d'un ensemble d'imagettes (autrement appelées portions d'image).
Imagette ou portion d'image : une imagette est le plus petit sous-élément du réseau de micro-images et qui va constituer une image. Sa taille est inférieure ou égale à celle d'un dispositif micro-optique. Cela permet d'avoir plusieurs imagettes possibles pour un dispositif donné. Ainsi, l'imagette sélectionnée par une micro-optique sera différente selon l'angle de vue, ce qui créera une image différente. Entre deux images consécutives, l'angle de vue peut varier de quelques degrés.

### Principes à la base de la présente invention :

Le premier principe mis en œuvre repose sur trois éléments distincts.

Le premier concerne la nature du réseau réfractif disposé au-dessus du réseau de micro-images. En s'inspirant du principe multiscopique on propose ici de combiner une fonction imageante (lentille ou axicon) avec une fonction de déviation de type prisme, et ceci de manière individuelle et indépendante pour chaque élément du réseau. Dans ces conditions, le réseau réfractif est avantageusement constitué d'un dispositif micro-optique comportant un élément imageant (une lentille ou un axicon) couplé à un prisme (dont l'angle et l'orientation sont fixés).

Le second repose sur la conception du réseau de micro-images. Ces dernières sont disposées et conçues de telle sorte que leur mise en regard avec l'élément optique crée, à certaines positions du regard, des images différentes.

Le troisième concerne le repliement de phase des dispositifs micro-optiques. En effet, ce repliement de phase permet de fusionner la fonction imageante avec la fonction prisme en transformant celle-ci en une fonction de translation de l'axe de l'objet imageant par rapport à l'optique. Ce repliement simplifie la fabrication des optiques et la mise en oeuvre du second élément.

Le second principe, c'est à dire le fait que le réseau de dispositifs de micro-optiques ne soit pas nécessairement périodique, rend plus difficile la copie du réseau si celui-ci n'est pas recouvert d'une couche de compensation, tel qu'un vernis visant à rendre inaccessible la surface du réseau. Si cette couche de compensation n'est pas présente, grâce à l'invention, l'arrangement des plus petites unités constituantes de ce dernier ne peut être en effet déduit par simple observation.

Outre le fait d'avoir recours au principe de repliement des optiques considérées, on procède au codage à la fois des translations des optiques imageantes (rendu possible par le repliement) et respectivement des imagettes de manière apparemment collectivement aléatoire, de façon à en éviter le déchiffrement facile et, par conséquent, de ne pouvoir le reproduire autrement que par une hypothétique copie fidèle et non déduite d'une simple observation.

Le dispositif permettant de reconstruire diverses images à un certain nombre de positions du regard aboutissant à une configuration de micro-optiques et d'imagettes associées est donc brassé aléatoirement, ce qui suppose un recalcul des déviations résultantes de ce brassage pour conserver les conditions de l'imagerie initiale.

Le résultat est une distribution des translations des micro-optiques qui n'est plus régulière et par conséquent beaucoup plus difficile à déduire et/ou reproduire.

Dans la pratique, ce brassage s'effectue avec une contrainte de déviation maximum limitée par la contrainte de fabrication lors du calcul du masque de phase. Par exemple, dans le cas d'une lentille de Fresnel d'ordre p, la limite est atteinte lorsque l'écart de phase entre 2 pixels consécutifs du bord du masque (c'est à dire la plus grande fréquence spatiale) est supérieur à pπ. Au-delà, on est sous-échantillonné.

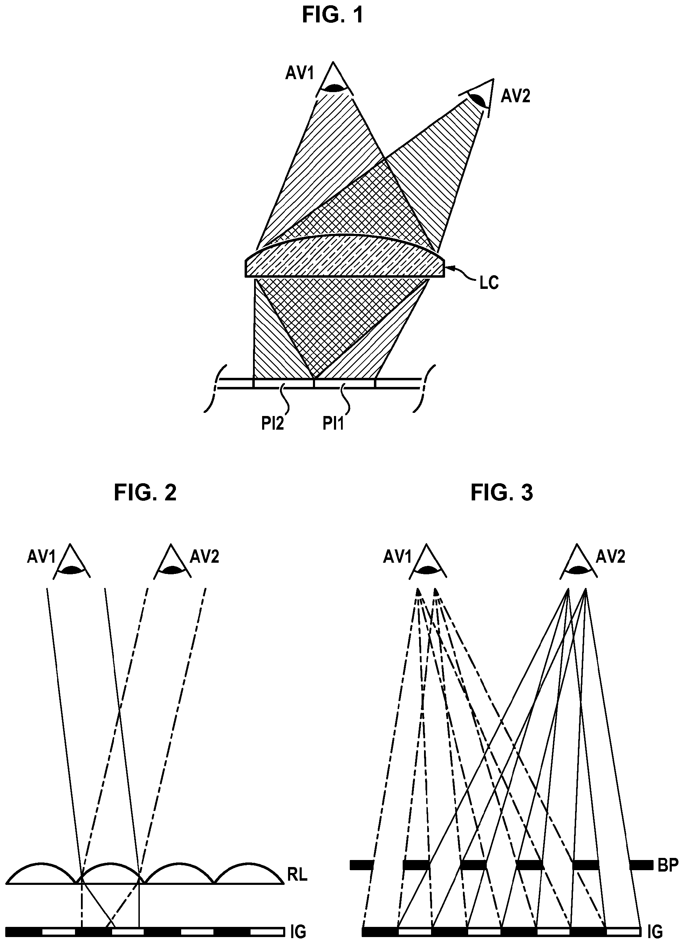

On illustre à la Figure 1 le principe de multiscopie. Ainsi, on a affaire ici à une lentille convergente LC, de sorte que l'on peut voir des images différentes pour des angles de vue différents. Pour l'angle de vue AV1, on ne voit que la portion d'image PI1, étant donné que la lentille convergente concentre les rayons. En revanche, pour l'angle de vue AV2, on verra seulement la portion d'image PI2. On peut ainsi avoir une alternance entre différentes images.

Les figures 2 et 3 illustrent des cas d'utilisation d'auto-stéréoscopie. Ainsi, en référence à la figure 2, on a affaire à un réseau lenticulaire RL qui, comme expliqué précédemment, permet de privilégier certains angles de vue AV1 et AV2, de sorte que sera visible une portion d'imagette IG pour chaque œil. Dans ces conditions, on aura l'impression de voir une image en relief. De la même manière et en référence à la figure 3, on peut utiliser les barrières de parallaxe BP qui bloquent des portions de faisceaux afin que chaque œil puisse voir des imagettes IG différentes.

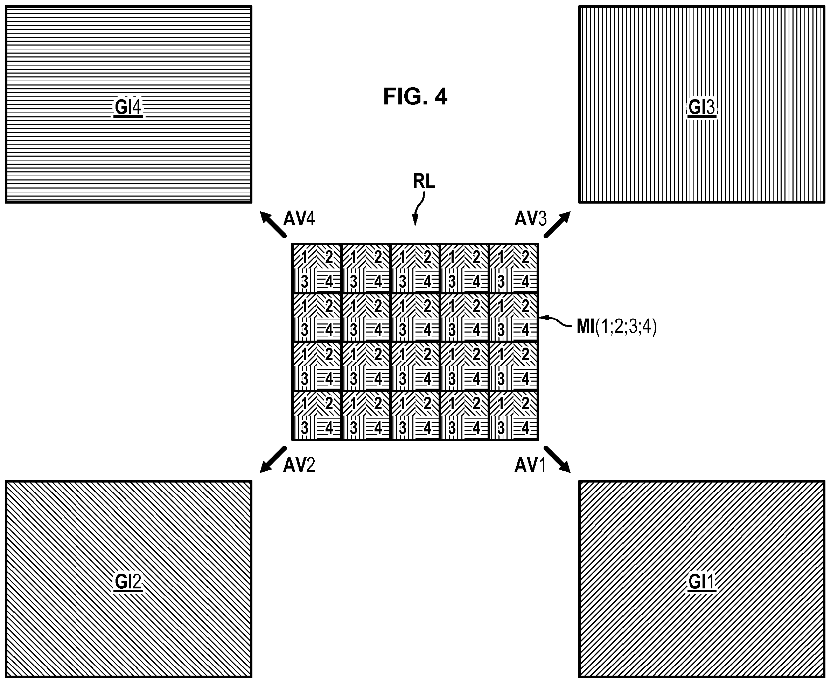

A la figure 4, on a en position centrale un réseau de micro-images MI1 à MI4. Chaque lentille du réseau de lentilles RL est délimitée par un carré sous lequel s'étendent quatre micro-images qui sont disposées de telle sorte qu'elles reconstituent une grande image GI1 à GI4 pour quatre angles de vue donnés AV1 à AV4.

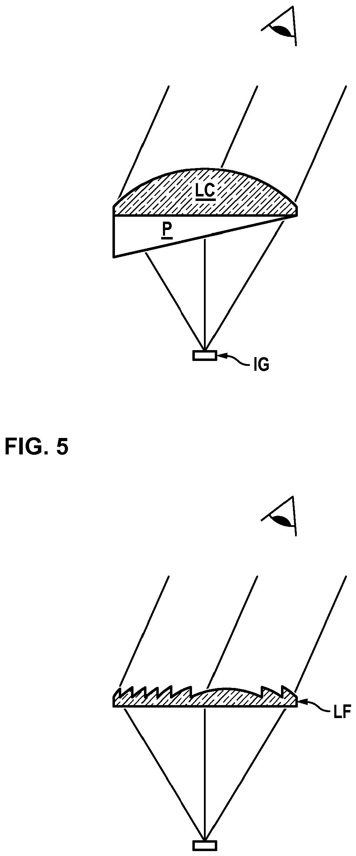

En se reportant à la figure 5, on comprend l'équivalence entre la combinaison d'une lentille réfractive LC (puissance optique) et d'un prisme P (déviation de la lumière) d'une part, et une lentille de Fresnel LF décentrée d'autre part. Cette dernière a les mêmes effets, à savoir concentration et déviation de la lumière. L'avantage est que la déviation se traduit par une translation.

Bien que cela ne soit pas représenté aux figures annexées, un axicon associé à un prisme est également équivalent à un réseau blazé circulaire décentré (en anglais « axicon phase hologram »).

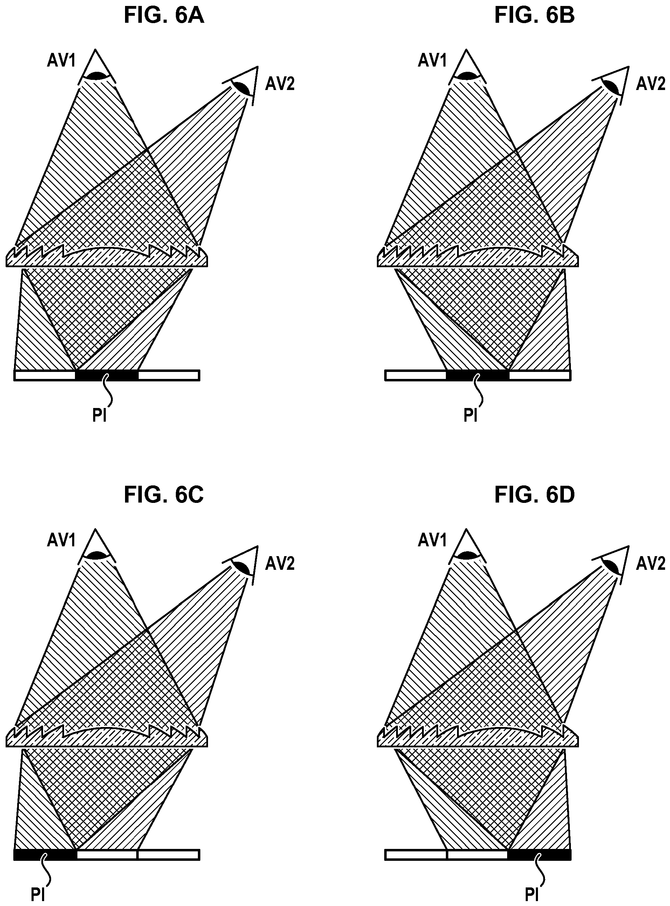

Les figures 6A à 6D présentent à la fois l'effet du décentrement de l'axe optique d'une lentille et l'adaptation de l'imagette (ou portion d'image) afin d'apercevoir ou non cette dernière à travers la lentille selon l'angle de vue souhaité. Dans le cas de la figure 6A, la portion d'image PI est perçue pour l'angle de vue AV1 lorsque la lentille est centrée.

Or si l'on décentre la lentille vers la droite, la portion d'image PI est alors vue pour l'angle de vue AV2 (cas de la figure 6B), ce qui revient à déplacer la portion d'image PI vers la gauche, dans le cas de la lentille centrée, comme le montre la figure 6C. Pour pouvoir être équivalent au cas de la figure 6A avec une lentille décentrée, il faut alors également déplacer la portion d'image PI, ainsi que le montre la figure 6D.

On voit que ces fonctionnalités peuvent être combinées (c'est à dire entrelacées) pour rendre plus difficile l'extraction des paramètres constitutifs de l'agencement concerné.

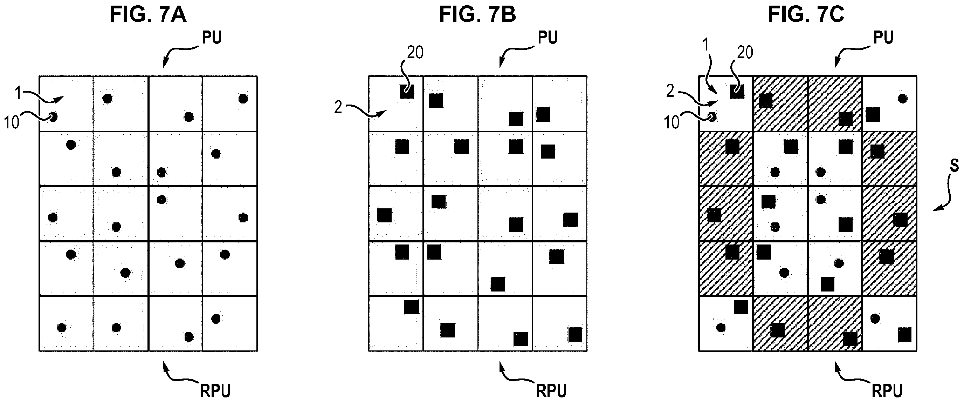

Aux figures 7A à 7C est représenté un exemple particulier de réalisation d'un ensemble selon la présente invention.

Ainsi, on a représenté à la figure 7A un dispositif de transparence complexe qui est constitué d'un réseau bidimensionnel périodique RPU formé de "pupilles" individuelles PU, c'est à dire d'emplacements ici de forme carrée, dans lequel chaque pupille PU comporte un dispositif micro-optique. Pour des raisons de lisibilité de la figure, le contour de chaque pupille PU est représenté ici, mais en réalité il n'est pas visible.

Toujours pour des raisons de facilité de lecture, on a représenté sur cette figure uniquement le centre optique 10 de lentilles 1 placée sur ce réseau. On constate que ces lentilles présentent des décalages variables de leur centre optique au sein du réseau.

A la figure 7B apparait toujours le réseau précité RPU, mais on y représente maintenant uniquement des micro-images 2, avec certaines imagettes 20 représentées par un carré noir. Ces imagettes constituent seulement une partie de la totalité des imagettes et constituent un « premier groupe ». On notera que leur répartition est également non périodique. Toutefois, la position de certaines d'entre elles coïncide avec celles des centres optiques repérés à la figure 7A.

La figure 7C représente la "situation finale", c'est à dire celle dans laquelle les deux réseaux sont superposés.

A la vue d'un observateur apparaît alors un symbole en forme générale de "O", représenté en grisé sur la figure, pour autant que la direction du regard soit normale au plan des réseaux. Ce "O" est une image reconstituée par la combinaison des imagettes 20 de la figure 7B.

Et pour les pixels n'appartenant pas au symbole, les imagettes sont éloignées du centre des lentilles.

Si l'on prend séparément le réseau de lentilles de la figure 7A ou le réseau d'imagettes de la figure 7B, on ne relève aucune information car leurs répartitions semblent toutes deux aléatoires et non liées. Ce n'est que la combinaison des deux qui fait apparaître l'information constituée par le symbole précité.

Bien que cela ne soit pas représenté ici, on pourrait avoir la révélation d'un deuxième symbole (voire des symboles supplémentaires), pour autant que les imagettes qui lui correspondent soient toutes visibles ensemble selon un autre axe d'observation.

Ainsi, ces imagettes (différentes de celles du « premier groupe » précité) constituent un « second groupe » d'imagettes.

De cette manière, l'observateur constatera la présence du « O » précité si la direction de son regard est normale au plan des réseaux. Puis, en orientant son regard selon une direction différente (ou en modifiant l'orientation de l'ensemble), il révèlera le deuxième symbole.

Enfin, pour toutes autres directions, aucun symbole ne sera révélé.

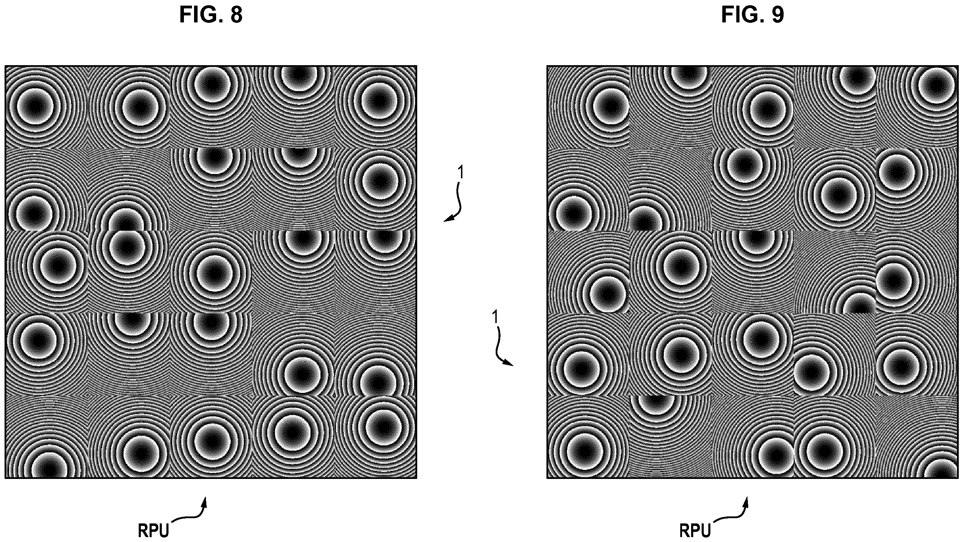

Les figures 8 et 9 représentent deux réseaux de microlentilles 1 qui ont été générés indépendamment l'un de l'autre et de façon aléatoire. Pour chacune des microlentilles, les micro-images placées en dessous sont adaptées en conséquence. Malgré la différence entre les deux réseaux, on peut créer une combinaison des dispositions lentilles-imagettes telle que l'on obtienne exactement le même effet visuel (par exemple, un carré qui grandit).

On constate que la distribution non régulière des lentilles empêche une reproduction autrement que par recopie de l'agencement particulier, cet agencement pouvant varier à l'infini.

L'ajout d'un symbole dissimulé dans les réseaux permet d'identifier que le motif réalisé n'est pas un faux grossier de l'original.

Ce symbole peut être, par exemple, une deuxième image uniquement observable selon un angle donné (et donc caché pour tous les autres angles d'observations) ou encore, un motif observable en réflexion à la surface des lentilles et lié à leur agencement.

Il peut s'agir par exemple d'un ensemble fini de lentilles dont l'axe optique est décalé de manière ordonnée dans le réseau non périodique pour former des caractères ou des motifs. L'observation de ces lentilles sous un angle donné (plutôt grand pour ne pas voir les imagettes) permettrait de reconnaître les caractères ou les motifs.

Avantageusement, l'ensemble E de la présente invention est porté par un document de sécurité tel qu'un billet de banque.

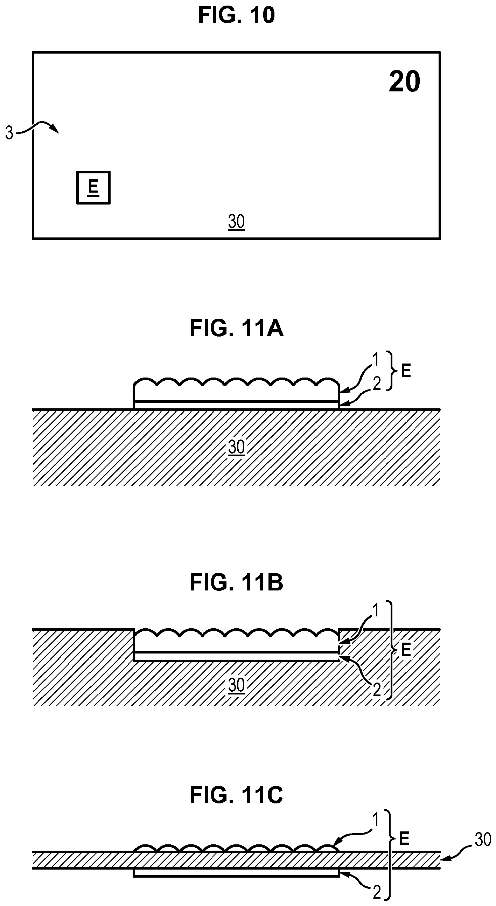

Un tel billet 3 a été représenté très schématiquement à la figure 10. Sur l'une 30 de ses faces opposées, il porte ledit ensemble E.

Comme le montre plus spécifiquement le mode de réalisation de la figure 11, l'ensemble E est constitué ici d'un réseau de lentille 1 et d'un réseau de micro-images 2 portés par la face 30 du billet.

L'ensemble E peut être réalisé dans ce cas en deux étapes, non nécessairement consécutives, directement sur le substrat du billet 3.

L'ensemble E peut être également un élément rapporté devenu solidaire du billet 3 après une étape d'application (par exemple sous la forme d'un film de transfert à chaud ou à froid, un film laminé à chaud ou à froid, etc.) ou d'intégration, comme illustré à la figure 11 B qui montre en coupe un fil de sécurité portant l'ensemble E, fil inséré dans la masse du substrat mais avec fenêtres (en anglais « windows ») permettant de l'observer à nu en surface en certains endroits).

Enfin, l'ensemble E peut-être traversant dans le substrat (comme montré à la figure 11 C) constituant le billet 3 (si celui-ci est constitué par exemple d'un polymère transparent opacifié à certains endroits, excepté en regard du réseau 1).

En ce qui concerne le réseau de micro-images 2, il est constitué alors du résultat reconnaissable de toute technique permettant de constituer sous forme d'images des formes, des motifs, des informations, par exemple et sans que ceci soit limitatif par impression, métallisation/démétallisation, gravure laser.

Pour ne retenir que la technique d'impression, cette dernière est réalisée selon tout procédé connu permettant d'appliquer au moins une encre choisie dans le groupe constitué par les encres suivantes : encre visible noire, de couleur, matte, brillante, à effet iridescent, métallique, optiquement variable, invisible mais visible sous rayonnement ultraviolet (fluorescence ou phosphorescence) ou visible sous rayonnement infrarouge.

Par ailleurs, le réseau de lentilles 1 s'étend au-dessus de l'impression, soit à demeure soit momentanément.

Ce réseau de lentilles peut par exemple être gravé dans une première étape dans une résine photosensible telle que la résine S1813 (fournisseur Shipley) par photolithographie.

On peut procéder comme suit pour son origination.

Une couche de résine est déposée sur un substrat en verre. La plaque résinée est ensuite exposée à un faisceau laser dans l'UV, qui est modulé par un masque correspondant au masque de phase à graver. Après développement, les zones du masque qui ont été insolées sont retirées (dans le cas d'une résine "positive", sinon ce sont les parties non insolées qui sont retirées). C'est ainsi que la plaque est gravée en relief, la profondeur de gravure maximale augmentant avec le temps d'insolation.

Il s'en suit, à partir de cette origination, un processus de réplication pour obtenir les outils puis le produit fini en résultant, c'est-à-dire le réseau de lentilles 1, soit directement sur le billet 3, soit sous une forme intégrable à ce dernier (pièce rapportée solidaire après application ou intégration) ou encore sous la forme qui exploite la transparence du substrat constitutif (cas du billet en substrat polymérique évoqué plus haut).

Enfin, il existe également une variante dans laquelle ce réseau de lentilles 1 est amovible et non solidaire du billet 3 et, dans ce cas seul, le réseau 2 est porté à demeure par le billet.

Préférentiellement, la face supérieure non plane du réseau de lentilles est revêtue d'un vernis transparent, de manière à la rendre plane et d'éviter toute tentative frauduleuse de reproduction par prise d'empreinte directe.

Une fois fabriqué, le réseau est appliqué sur l'impression mise en œuvre précédemment.

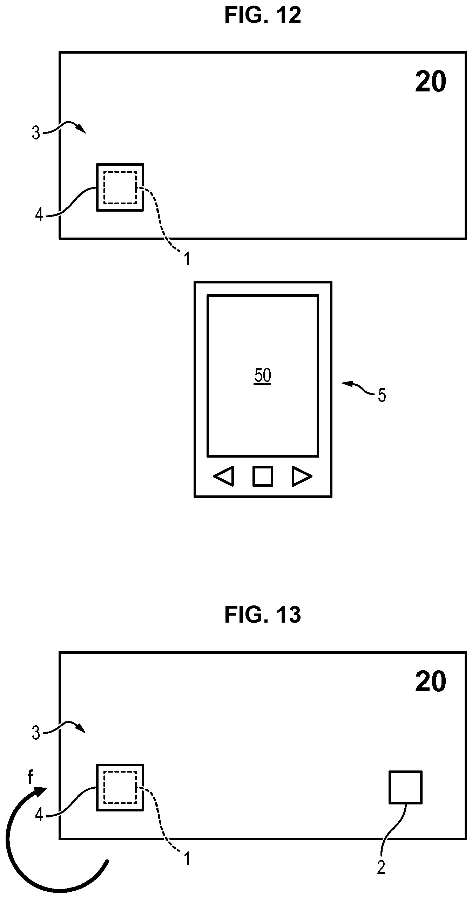

Dans le mode de réalisation de la figure 12, le billet 3 comporte une fenêtre 4. Cette fenêtre est solidaire du reste du billet dans le cas d'un substrat transparent (par exemple billet à base de polypropylène bi-orienté). Quand le substrat est opaque, (par exemple billet à base de fibres de coton) cette fenêtre est constituée d'une ouverture obturée par un matériau polymère transparent, ce dernier accueillant le réseau de lentilles 1.

Quant au réseau de micro images, il peut être affiché sur l'écran 50 d'un téléphone 5 de type "smartphone" ou sur l'écran à affichage digital d'un outil numérique, nomade ou non.

Ainsi, en mettant en regard la fenêtre et le réseau affiché sur l'écran, on peut procéder à la vérification de l'authenticité du billet, selon que l'on révèle ou non une information reconnaissable, ou on met en exergue un effet visuel reconnaissable.

Dans le mode de réalisation de la figure 13, les réseaux 1 et 2 sont disposés en deux régions différentes du billet 3, de sorte qu'en repliant ce billet comme montré par la flèche f, on peut superposer les deux réseaux pour révéler une information ou un effet visuel, reconnaissable.

Dans un mode de réalisation non représenté, on pourrait avoir affaire à un billet tel que celui de la figure 12, dans lequel la fenêtre porte, en plus du réseau de lentilles, seulement une partie (par exemple la moitié) du réseau de micro-images, tandis que la partie complémentaire est affichée sur l'écran d'un téléphone ou autre.

Enfin dans un ultime mode de réalisation non représenté, on pourrait avoir un billet 3 qui porte uniquement le réseau de micro-images 2 et le réseau de lentilles 1 serait construit sur un support amovible et rapporté momentanément uniquement pour les besoins d'une authentification.

## Revendications

1. Ensemble (E) constitué d'une part, d'un dispositif de transparence complexe, c'est à dire d'un dispositif réfractif et/ou diffractif agissant sur la phase de la lumière et, d'autre part, d'au moins un réseau de micro-images, dans lequel :
- ledit dispositif de transparence complexe est constitué d'un réseau (RPU) bidimensionnel périodique formé de "pupilles" individuelles (PU) dans lequel chaque pupille (PU) comporte un dispositif micro-optique (1), au moins une partie de ces dispositifs micro-optiques (1) présentant un axe optique (10) non centré, et au moins une partie de ces dispositifs micro-optiques (1) étant positionnée de manière non périodique, c'est à dire avec des décalages variables de leur axe optique au sein dudit réseau (RPU) ;
- ledit réseau de micro-images (2) est constitué d'autant de micro-images que de dispositifs micro-optiques (1) ;
- chaque micro-image (2) présente un contour identique à celui de la pupille associée (PU) et une surface au plus identique à celle de la pupille associée (PU) ;
- chaque micro-image (2) est subdivisée en imagettes (20),
de sorte que lorsque ledit dispositif de transparence est positionné en regard dudit réseau de micro-images (2), et qu'un observateur observe ledit réseau au travers dudit dispositif de transparence, il voit, au moins selon une direction d'observation donnée, une image reconstituée (S) par la combinaison des imagettes associées à cette direction,
**caractérisé par le fait qu'**au sein d'une même subdivision, certaines imagettes (20), c'est-à-dire seulement une partie de celles-ci, lesquelles constituent un « premier groupe », sont réparties de telle manière que lorsque ledit dispositif de transparence est positionné en regard dudit réseau de micro-images (2), ces imagettes (20) sont disposées chacune selon l'axe optique dudit dispositif micro-optique (1) associé.

2. Ensemble selon la revendication 1, **caractérisé par le fait que** chacun desdits dispositifs micro-optiques (1) présente un axe optique (10) non centré et que tous lesdits dispositifs micro-optiques sont positionnés de manière non périodique.

3. Ensemble selon la revendication 1 ou 2, **caractérisé par le fait que** lesdites pupilles (PU) sont de forme et de surface identiques.

4. Ensemble selon l'une des revendications 1 à 3, **caractérisé par le fait que** lesdits dispositifs micro-optiques (1) présentant un axe optique non centré sont constitués de lentilles de Fresnel.

5. Ensemble selon l'une des revendications 1 à 3, **caractérisé par le fait que** lesdits dispositifs micro-optiques (1) présentant un axe optique non centré sont constitués de réseaux blazés circulaires.

6. Ensemble selon l'une des revendications précédentes, **caractérisé par le fait que** chaque micro-image (2) est subdivisée en au moins deux imagettes (20).

7. Ensemble selon l'une des revendications précédentes, **caractérisé par le fait qu'**au sein d'une même subdivision, d'autres imagettes, lesquelles constituent un deuxième groupe, sont réparties de telle manière que lorsque ledit dispositif de transparence est positionné au regard dudit réseau de micro-images (2), ces imagettes sont disposées chacune selon un même axe, différent de l'axe optique dudit dispositif micro-optique associé.

8. Ensemble selon l'une des revendications précédentes, **caractérisé par le fait que** l'image reconstituée par la combinaison des imagettes (20) de chaque subdivision, vue selon au moins un angle d'observation prédéterminé, constitue une information reconnaissable (S) ou présente un effet visuel reconnaissable.

9. Ensemble selon l'une des revendications précédentes, **caractérisé par le fait que** ledit dispositif de transparence complexe et ledit réseau de micro-images (2) sont portés par un même support.

10. Ensemble selon l'une des revendications 1 à 8, **caractérisé par le fait que** ledit dispositif de transparence complexe et ledit réseau de micro-images (2) sont portés par des supports différents.

11. Ensemble selon la revendication 8, **caractérisé par le fait que** ledit réseau bidimensionnel de micro-images est généré par un dispositif d'affichage tel qu'un écran d'outil numérique (5), nomade ou non.

12. Document de sécurité, tel qu'un billet banque (3), **caractérisé par le fait qu'**au moins l'une de ses faces opposées (30) porte un dispositif de transparence complexe de l'ensemble selon l'une des revendications précédentes.

13. Document selon la revendication 12, **caractérisé par le fait que** ledit dispositif de transparence complexe s'étend au-dessus d'une impression portée par l'une desdites faces opposées (30), cette impression constituant le réseau bidimensionnel de micro-images (2) dudit ensemble selon l'une des revendications 1 à 9.

14. Document selon la revendication 12, **caractérisé par le fait que** ledit dispositif de transparence complexe s'étend au travers d'une fenêtre (4) qui débouche sur lesdites faces opposées et qu'il comporte une impression constituant le réseau bidimensionnel de micro-images (2) dudit ensemble selon la revendication 1 à 9, cette fenêtre (4) et cette impression étant disposées l'une par rapport à l'autre de manière à pouvoir les superposer au moins momentanément.

15. Document selon l'une des revendications 12 à 14, **caractérisé par le fait que** ladite impression est constituée d'au moins une encre choisie dans le groupe constitué par les encres suivantes : encre visible noire, de couleur, matte, brillante, à effet iridescent, métallique, optiquement variable, invisible mais visible sous rayonnement ultraviolet (fluorescence ou phosphorescence) ou visible sous rayonnement infrarouge.

16. Document selon l'une des revendications 12 à 15, **caractérisé par le fait que** ledit dispositif de transparence est revêtu d'une couche de vernis transparent, de sorte que la surface supérieure dudit dispositif est plane.

## Patentansprüche

1. Anordnung (E), die einerseits aus einer komplexen Transparenzvorrichtung, das heißt einer refraktiven und/oder diffraktiven Vorrichtung, die auf die Phase des Lichts wirkt, und andererseits aus mindestens einem Gitter von Mikrobildern besteht, wobei:
- die komplexe Transparenzvorrichtung aus einem periodischen zweidimensionalen Gitter (RPU) besteht, das aus einzelnen "Pupillen" (PU) besteht, wobei jede Pupille (PU) eine mikrooptische Vorrichtung (1) umfasst, wobei mindestens ein Teil dieser mikrooptischen Vorrichtungen (1) eine nicht zentrierte optische Achse (10) aufweist und mindestens ein Teil dieser mikrooptischen Vorrichtungen (1) auf nicht periodische Weise, das heißt mit variablen Versetzungen ihrer optischen Achse innerhalb des Gitters (RPU), positioniert ist;
- das Gitter von Mikrobildern (2) aus so vielen Mikrobildern wie mikrooptischen Vorrichtungen (1) besteht;
- jedes Mikrobild (2) eine Kontur, die identisch mit derjenigen der zugehörigen Pupille (PU) ist, und eine Oberfläche aufweist, die am identischsten mit derjenigen der zugehörigen Pupille (PU) ist;
- jedes Mikrobild (2) in kleine Bilder (20) unterteilt ist,
derart, dass, wenn die Transparenzvorrichtung dem Gitter von Mikrobildern (2) gegenüberliegend positioniert ist und ein Beobachter das Gitter durch die Transparenzvorrichtung beobachtet, er gemäß mindestens einer gegebenen Betrachtungsrichtung ein durch die Kombination der dieser Richtung zugehörigen Bilder rekonstruiertes Bild (S) sieht,
**dadurch gekennzeichnet, dass** innerhalb einer gleichen Unterteilung bestimmte kleine Bilder (20), das heißt lediglich ein Teil von diesen, die eine "erste Gruppe" bilden, derart verteilt sind, dass, wenn die Transparenzvorrichtung dem Gitter von Mikrobildern (2) gegenüberliegend positioniert ist, diese kleinen Bilder (20) jeweils gemäß der optischen Achse der zugehörigen mikrooptischen Vorrichtung (1) angeordnet sind.

2. Anordnung nach Anspruch 1, **dadurch gekennzeichnet**, das jede der mikrooptischen Vorrichtungen (1) eine nicht zentrierte optische Achse (10) aufweist und dass alle mikrooptischen Vorrichtungen auf nicht periodische Weise positioniert sind.

3. Anordnung nach Anspruch 1 oder 2, **dadurch gekennzeichnet, dass** die Pupillen (PU) eine identische Form und Oberfläche aufweisen.

4. Anordnung nach einem der Ansprüche 1 bis 3, **dadurch gekennzeichnet, dass** die mikrooptischen Vorrichtungen (1), die eine nicht zentrierte optische Achse aufweisen, aus Fresnel-Linsen bestehen.

5. Anordnung nach einem der Ansprüche 1 bis 3, **dadurch gekennzeichnet, dass** die mikrooptischen Vorrichtungen (1), die eine nicht zentrierte optische Achse aufweisen, aus kreisförmigen Blaze-Gittern bestehen.

6. Anordnung nach einem der vorhergehenden Ansprüche, **dadurch gekennzeichnet, dass** jedes Mikrobild (2) in mindestens zwei kleine Bilder (20) unterteilt ist.

7. Anordnung nach einem der vorhergehenden Ansprüche, **dadurch gekennzeichnet, dass** innerhalb einer selben Unterteilung andere kleine Bilder, die eine zweite Gruppe bilden, derart verteilt sind, dass wenn die Transparenzvorrichtung dem Gitter von Mikrobildern (2) gegenüberliegend positioniert ist, diese kleinen Bilder jeweils gemäß einer selben Achse angeordnet sind, die sich von der optischen Achse der zugehörigen mikrooptischen Vorrichtung unterscheidet.

8. Anordnung nach einem der vorhergehenden Ansprüche, **dadurch gekennzeichnet, dass** das durch die Kombination der kleinen Bilder (20) von jeder Unterteilung wieder zusammengestellte Bild, aus mindestens einem vorbestimmten Betrachtungswinkel gesehen, eine erkennbare Information (S) bildet oder einen erkennbaren visuellen Effekt aufweist.

9. Anordnung nach einem der vorhergehenden Ansprüche, **dadurch gekennzeichnet, dass** die komplexe Transparenzvorrichtung und das Gitter von Mikrobildern (2) von einem gleichen Träger getragen werden.

10. Anordnung nach einem der Ansprüche 1 bis 8, **dadurch gekennzeichnet, dass** die komplexe Transparenzvorrichtung und das Gitter von Mikrobildern (2) von unterschiedlichen Trägern getragen werden.

11. Anordnung nach Anspruch 8, **dadurch gekennzeichnet, dass** das zweidimensionale Gitter von Mikrobildern durch eine Anzeigevorrichtung, wie beispielsweise einen Bildschirm eines mobilen oder nicht mobilen digitalen Werkzeugs (5), erzeugt wird.

12. Sicherheitsdokument, wie beispielsweise eine Banknote (3), **dadurch gekennzeichnet, dass** mindestens eine seiner entgegengesetzten Seiten (30) eine komplexe Transparenzvorrichtung der Anordnung nach einem der vorhergehenden Ansprüche trägt.

13. Dokument nach Anspruch 12, **dadurch gekennzeichnet, dass** die komplexe Transparenzvorrichtung sich über einem Druck erstreckt, der von einer der entgegengesetzten Seiten (30) getragen wird, wobei dieser Druck das zweidimensionale Gitter von Mikrobildern (2) der Anordnung nach einem der Ansprüche 1 bis 9 bildet.

14. Dokument nach Anspruch 12, **dadurch gekennzeichnet, dass** die komplexe Transparenzvorrichtung sich durch ein Fenster (4) erstreckt, das auf den entgegengesetzten Seiten mündet, und dass sie einen Druck umfasst, der das zweidimensionale Netz von Mikrobildern (2) der Anordnung nach Anspruch 1 bis 9 bildet, wobei dieses Fenster (4) und dieser Druck derart in Bezug zueinander angeordnet sind, dass sie zumindest zeitweilig überlagert werden können.

15. Dokument nach einem der Ansprüche 12 bis 14, **dadurch gekennzeichnet, dass** der Druck aus mindestens einer Farbe besteht, die aus der Gruppe ausgewählt ist, die aus den folgenden Farben besteht: schwarz, farbig, matt, glänzend, mit schillernder Wirkung, metallisch, optisch veränderlich sichtbare, unsichtbare, aber unter Ultraviolettstrahlung (Fluoreszenz oder Phosphoreszenz) sichtbare oder unter Infrarotstrahlung sichtbare Farbe.

16. Dokument nach einem der Ansprüche 12 bis 15, **dadurch gekennzeichnet, dass** die Transparenzvorrichtung mit einer transparenten Lackschicht bedeckt ist, derart dass die obere Oberfläche der Vorrichtung eben ist.

## Claims

1. An assembly (E) consisting on the one hand, of a complex transparency device, i.e. of a refractive and/or diffractive device acting on the phase of the light and, on the other hand, of at least one micro-image array, wherein:
- said complex transparency device consists of a periodic two-dimensional array (RPU) formed of individual "pupils" (PU) in which each pupil (PU) includes a micro-optical device (1), at least part of these micro-optical devices (1) having a non-centered optical axis (10), and at least part of these micro-optical devices (1) being positioned non-periodically, i.e. with variable offsets of their optical axis within said array (RPU);
- said micro-image array (2) consists of as many micro-images as there are micro-optical devices (1);
- each micro-image (2) has a contour identical to that of the associated pupil (PU) and a surface at most identical to that of the associated pupil (PU);
- each micro-image (2) is subdivided into at least one thumbnail image (20),
so that when said transparency device is positioned facing said micro-image array (2), and when an observer observes said array through said transparency device, he sees, at least along a given direction of observation, an image (S) reconstructed by the combination of the thumbnail images associated with this direction,
**characterized by** the fact that within the same subdivision, some thumbnail images (20); i.e. only part of them, which constitute a "first group", are distributed in such a way that when said transparency device is positioned facing said micro-image array (2), these thumbnail images (20) are each disposed along the optical axis of said associated micro-optical device (1) .

2. The assembly according to claim 1, **characterized in that** each of said micro-optical devices (1) has a non-centered optical axis (10) and that all said micro-optical devices are positioned non-periodically.

3. The assembly according to claim 1 or 2, **characterized in that** said pupils (PU) are of identical shape and surface.

4. The assembly according to any of claims 1 to 3, **characterized in that** said micro-optical devices (1) having a non-centered optical axis consist of Fresnel lenses.

5. The assembly according to any of claims 1 to 3, **characterized in that** said micro-optical devices (1) having a non-centered optical axis consist of circular blazed gratings.

6. The assembly according to any of the preceding claims, **characterized in that** each micro-image (2) is subdivided into at least two thumbnail images (20).

7. The assembly according to any of the preceding claims, **characterized in that** within the same subdivision, other thumbnail images, which constitute a second group, are distributed in such a way that when said transparency device is positioned facing said micro-image array (2), these thumbnail images are each disposed along the same axis, different from the optical axis of said associated micro-optical device.

8. The assembly according to any of the preceding claims, **characterized in that** the image reconstructed by the combination of the thumbnail images (20) of each subdivision, seen from at least one predetermined angle of observation, constitutes a recognizable information (S) or has a recognizable visual effect.

9. The assembly according to any of the preceding claims, **characterized in that** said complex transparency device and said micro-image array (2) are carried by the same medium.

10. The assembly according to any of claims 1 to 8, **characterized in that** said complex transparency device and said micro-image array (2) are carried by different media.

11. The assembly according to claim 8, **characterized in that** said two-dimensional micro-image array is generated by a display device such as a digital tool screen (5), whether it is mobile or not.

12. A security document, such as a banknote (3), **characterized in that** at least one of its opposite faces (30) carries a complex transparency device of the assembly according to any of the preceding claims.

13. The document according to claim 12, **characterized in that** said complex transparency device extends above a printing carried by one of said opposite faces (30), this printing constituting the two-dimensional micro-image array (2) of said assembly according to any of claims 1 to 9.

14. The document according to claim 12, **characterized in that** said complex transparency device extends through a window (4) which opens on said opposite faces and which it includes a printing constituting the two-dimensional micro-image array (2) of said assembly according to claim 1 to 9, this window (4) and this printing being disposed relative to each other so that they can be superimposed at least momentarily.

15. The document according to any of claims 12 to 14, **characterized in that** said printing consists of at least one ink chosen from the group consisting of the following inks: visible black ink, colored ink, matt ink, gloss ink, ink with iridescent effect, metallic ink, optically variable ink, invisible ink but visible under ultraviolet radiation (fluorescence or phosphorescence) or visible under infrared radiation.

16. The document according to any of claims 12 to 15, **characterized in that** said transparency device is coated with a layer of transparent varnish, so that the upper surface of said device is planar.
